# EUROPEAN PATENT APPLICATION

(11) **EP 4 825 923 A1**
(43) Date of publication of application: **21.10.2026**
(21) Application number: 24903534.6
(22) Date of filing: 02.12.2024
(51) Int. Cl.: C09D 4/02, C09D 7/47, C09D 7/48

(54) **PHOTOPOLYMERIZABLE COATING COMPOSITION AND PRODUCT USING SAME**

(30) Priority: 14.12.2023 JP 2023211181
(71) Applicant: JNC Corporation, Chiyoda-ku Tokyo 100-8105 (JP)
(72) Inventor: KONDO, Kyoko, Ichihara-shi, Chiba 290-8551 (JP); SHIKAMA, Keiko, Ichihara-shi, Chiba 290-8551 (JP); YODA, Akiko, Ichihara-shi, Chiba 290-8551 (JP); ITO, Kenya, Ichihara-shi, Chiba 290-8551 (JP); KAGEYAMA, Akiko, Ichihara-shi, Chiba 290-8551 (JP)
(74) Representative: Becker, Eberhard
(86) International application number: PCT/JP2024/042457
(87) International publication number: WO 2025/126876

(57) **Abstract**

Provided is a coating film having improved weathering resistance. Provided is a photopolymerizable coating composition containing a component (a) that is a urethane (meth)acrylate, a component (b) that is a photopolymerizable (meth)acrylic compound, and a component (c) that is a photostabilizer represented by formula (2), said composition containing the component (a) and the component (b) as photopolymerizable components. Relative to the total amount of photopolymerizable components, the component (a) is blended at a quantity of 1-50 parts by weight and the component (b) is blended at a quantity of 50-99 parts by weight. If the total amount of the component (a) and the component (b) is 100 parts by weight, the component (c) is blended at a quantity of 1-20 parts by weight. The component (b) includes a component (b1) that is a photopolymerizable acrylic compound having a structural unit derived from a fluorosilsesquioxane derivative represented by formula (1), a component (b2) that is a reactive silicone, and a component (b3) that is a photopolymerizable acrylic compound not having a urethane unit and having neither a fluorine atom nor an Si atom.

## Description

### Technical Field

The present invention relates to a photopolymerizable coating composition usable as a material for a top coat layer of various articles, laminates such as surface protective films, decorative films, and paint protection films, and product using same.

### Related Art

Laminate materials such as top coat layers, surface protective films, decorative films, and paint protection films are frequently used on surfaces of various articles including vehicles such as automobiles and motorcycles, as well as ships, buildings, electrical products, exhibits, interiors, furniture, factory equipment, industrial machinery, and medical devices, for various purposes such as surface protection and paint replacement.

Among these, paint protection films (PPF) in particular are film-type products used for surface protection of industrial products used outdoors. The basic structure of a PPF is a laminate including at least two layers: a substrate including a flexible and transparent resin film, and an adhesive layer. In general, PPF is supplied to the market in the form of a laminate further having a coat layer on the surface of the substrate opposite to the adhesive layer for enhancing the antifouling function and scratch resistance of the substrate, and a release layer on the surface of the adhesive layer opposite to the substrate. In using a PPF, the PPF is first cut to match the surface area of the industrial product to be protected, and the adhesive layer of the cut PPF is brought into close contact with the surface to be protected. A product whose surface is covered with the PPF is protected from various external stimuli such as wind and rain, dust, sand, river water, microorganisms, and contamination and damage caused by contact with or excretion from animals, plants, and insects, while the paint, shape, and appearance of the product remain intact. Specifically, the PPF acts as a cushion to absorb pressure and impact from the outside, and repels rainwater and contaminants, thereby reducing the influence of external stimuli on the product itself.

Such PPF was originally developed for industrial products used in harsh environments such as aircraft, but has been gaining widespread use today as a surface protection member for bodies of automobiles and motorcycles. For example, by covering the roof, hood, front, doors, and trunk door of an automobile with a PPF, the body may be protected from bird droppings, insect remains, cat paw prints, vandalism, scratches from luggage handling, and stone chip damage that trouble drivers. In general, contamination on the surface of the PPF may be readily removed by washing the PPF-covered surface with water, and thus the PPF is used over a relatively long period. A PPF that has been used for a certain period may be peeled off from the body and replaced with a new PPF.

With the widespread use of vehicles such as automobiles and motorcycles in various parts of the world in recent years, there is a demand for PPF that may be used in a wider range of environments, for example, in cold regions, tropical areas, and arid regions with harsher climates. Moreover, with the expansion of the PPF market, there is a growing demand for PPF that may be applied more readily and appropriately even by workers without specialized skills. Accordingly, PPF in recent years is required to have various properties, such as flexibility to conform to the varied surface shapes of automobiles and motorcycles, durability to withstand external stimuli over a long period, transparency and smoothness that do not impair the appearance of the product itself, and good releasability upon replacement.

As such a PPF, for example, Patent Document 1 describes providing a PPF having excellent adhesion properties and reduced adhesive residue by laminating a base film and an adhesive layer with controlled surface roughness. However, this PPF does not include a specific examination of an antifouling layer to be added to the surface of the base film, and there is a problem with practicality for automobiles and motorcycles where appearance is of great importance.

Also, for example, Patent Document 2 describes a PPF in which a first layer containing polyurethane, a second layer containing thermoplastic polyurethane, and a third layer containing a pressure-sensitive adhesive are laminated in this order. However, further improvement of various properties is also sought for this PPF.

### Citation List

### Patent Literature

Patent Document 1: Japanese Patent Application Laid-Open Publication No. 2016-20079
Patent Document 2: Japanese Translation of PCT International Application Publication No. JP-T-2008-539107

### SUMMARY OF INVENTION

### Technical Problem

As described above, there is room for improvement in the preceding PPF technology. The inventors of the present invention focused in particular on weather resistance as a property to be improved - specifically, the point that the initial surface shape is maintained even after use in harsh outdoor environments over a long period, which has not been examined in the aforementioned preceding technology. The inventors aimed to achieve improvement in the weather resistance by modifying the coating material constituting the outermost surface of laminates such as PPF.

### Solution to Problem

As a result, the inventors found that an acrylic photopolymerizable coating composition containing specific photopolymerizable components and a light stabilizer provides a coat layer that maintains the surface shape continuously over a long period under outdoor environmental conditions. The inventors further found that a coat layer including a cured product of the photopolymerizable coating composition is applicable as laminates such as PPF. That is, the present invention is as follows.

(Invention 1) A photopolymerizable coating composition, includes: component (a): urethane (meth)acrylate, component (b): photopolymerizable (meth)acrylic compounds, and component (c): a light stabilizer represented by formula (2), wherein the component (a) and the component (b) are included as photopolymerizable components, and are mixed at a ratio of the component (a): 1 to 50 parts by weight and the component (b): 50 to 99 parts by weight relative to a total amount of the photopolymerizable components, and taking a total amount of the component (a) and the component (b) as 100 parts by weight, the component (c) is mixed at a ratio of 1 to 20 parts by weight,
the component (b) including:
component (b1): a photopolymerizable acrylic compound having a structural unit derived from a fluorosilsesquioxane derivative represented by formula (1),
component (b2): a reactive silicone, and
component (b3): a photopolymerizable acrylic compound having no urethane unit and not having both fluorine atom and Si atom at the same time.

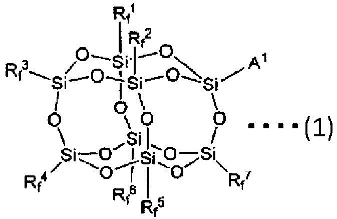

(In formula (1), R^{f1} to R^{f7} are each independently a linear or branched fluoroalkyl having 1 to 20 carbon atoms, in which at least one methylene may be replaced by oxygen; a fluoroaryl having 6 to 20 carbon atoms, in which at least one hydrogen may be replaced by fluorine or trifluoromethyl; or a fluoroarylalkyl having 7 to 20 carbon atoms, in which at least one hydrogen in the aryl or alkyl may be replaced by fluorine or trifluoromethyl, and A¹ is a group represented by formula (1-1) or formula (1-2).)

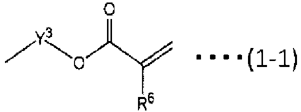

(In formula (1-1), Y³ is an alkylene having 2 to 10 carbon atoms, and R⁶ is hydrogen, a linear alkyl having 1 to 5 carbon atoms, a branched alkyl having 3 to 5 carbon atoms, or an aryl having 6 to 10 carbon atoms.)

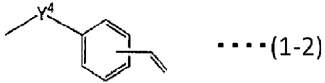

(In formula (1-2), Y⁴ is a single bond or an alkylene having 1 to 10 carbon atoms.)

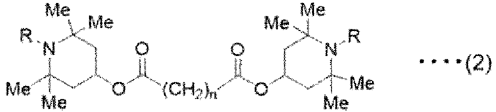

(In formula (2), n is an integer of 4 to 12, R is each independently an alkyl having 1 to 5 carbon atoms or an alkoxy having 4 to 10 carbon atoms, and Me is methyl.)

(Invention 2) The photopolymerizable coating composition of Invention 1, wherein the component (b1) includes a structural unit derived from γ-methacryloxypropylhepta(trifluoropropyl)-T8-silsesquioxane represented by formula (1-3).

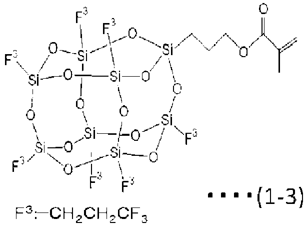

The component (b2) is a polyorganosiloxane compound having terminal vinyl groups.

(Invention 3) The photopolymerizable coating composition of Invention 1, further including component (d): an ultraviolet absorber.

(Invention 4) The photopolymerizable coating composition of Invention 2, further including component (d): an ultraviolet absorber.

(Invention 5) The photopolymerizable coating composition of Invention 1, further including component (e): fluorine-based surfactant.

(Invention 6) The photopolymerizable coating composition of Invention 2, further including component (e): a fluorine-based surfactant.

(Invention 7) A laminate is formed by a coat layer including a cured product of the photopolymerizable coating composition of any one of Inventions 1 to 6 and a substrate layer in contact with each other.

(Invention 8) A laminate is formed by a coat layer including a cured product of the photopolymerizable coating composition of any one of Inventions 1 to 6, a substrate layer including thermoplastic polyurethane, and an adhesive layer including a pressure-sensitive adhesive, in contact with each other in this order.

(Invention 9) An article has the laminate of Invention 8 affixed to a surface thereof via the adhesive layer.

### Effects of Invention

The coat layer obtained from the photopolymerizable coating composition of the present invention has a favorable surface morphology that persists even after prolonged outdoor use, and thus the laminates of the present invention have excellent weather resistance.

### BRIEF DESCRIPTION OF DRAWINGS

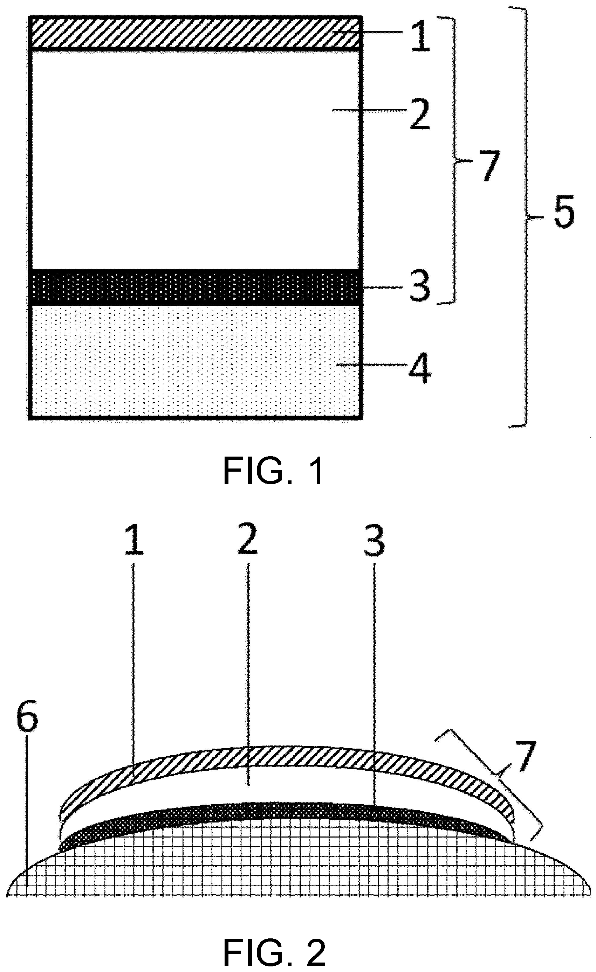

[FIG. 1] FIG. 1 is a diagram schematically illustrating an example of the laminates of the present invention.
[FIG. 2] FIG. 2 is a diagram schematically illustrating the laminates of the present invention used as PPF.

### DESCRIPTION OF THE EMBODIMENTS

### [1. Photopolymerizable Coating Composition]

The photopolymerizable coating composition of the present invention includes component (a) urethane (meth)acrylate, component (b) photopolymerizable (meth)acrylic compounds, and component (c) light stabilizer represented by formula (2) as indispensable components, and includes the component (a) and the component (b) as photopolymerizable components. In the photopolymerizable coating composition of the present invention, the component (a) and the component (b) may be in a diluted state or in a state including an undiluted polymer. In the present text, "(meth)acrylate" means acrylate or methacrylate, "(meth)acrylo" means acrylo or methacrylo, and "(meth)acrylic" means acrylic or methacrylic.

In the present invention, from the perspective of maintaining a favorable surface morphology of the coat layer even after prolonged use in an outdoor environment, i.e., from the perspective of excellent weather resistance, the component (a) and the component (b) are mixed at a ratio of the component (a): 1 to 50 parts by weight and the component (b): 50 to 99 parts by weight, preferably the component (a): 1 to 30 parts by weight and the component (b): 70 to 99 parts by weight, relative to the total amount of the photopolymerizable components. In addition, from the perspective of maintaining a favorable surface morphology of the coat layer even after prolonged use in an outdoor environment, i.e., from the perspective of excellent weather resistance, the component (c) is mixed at a ratio of 1 to 20 parts by weight, preferably 1 to 10 parts by weight, relative to 100 parts by weight of the total amount of the component (a) and the component (b).

### [Component (a): Urethane (Meth)acrylate]

The urethane (meth)acrylate used as the component (a) is a general term for oligomeric compounds having reactive (meth)acryloyl groups at their terminals, obtained by a reaction of an isocyanate compound, a polyol, a hydroxyl group-containing (meth)acrylic monomer, and an isocyanate group-containing (meth)acrylic monomer.

The urethane (meth)acrylate used in the present invention is typically an ultraviolet-curable urethane (meth)acrylate, and is preferably a urethane (meth)acrylate obtained by reacting (i) an isocyanate compound including an aliphatic isocyanate compound and/or an alicyclic isocyanate compound, (ii) one or more polyol compounds selected from an ester-based polyol, (iii) an ether-based polyol, or (iv) a polycarbonate-based polyol, and (v) a (meth)acrylate compound having a hydroxyl group.
(i) Examples of the aliphatic isocyanate compound include hexamethylene diisocyanate, an isocyanurate-modified product of hexamethylene diisocyanate, and trimethylhexamethylene diisocyanate. Examples of the alicyclic isocyanate compound include isophorone diisocyanate, 4,4'-dicyclohexylmethane isocyanate, and hydrogenated xylylene diisocyanate.
(ii) Examples of the ester-based polyol include ester compounds obtained by reacting diols with dicarboxylic acids. Examples of the diols include 3-methyl-1,5-pentanediol, neopentyl glycol, ethylene glycol, diethylene glycol, propylene glycol, dipropylene glycol, 1,3-butanediol, 1,4-butanediol, 1,6-hexanediol, 2-methyl-1,8-octanediol, and 1,9-nonanediol. Examples of the dicarboxylic acids include sebacic acid, adipic acid, dimer acid, succinic acid, azelaic acid, maleic acid, terephthalic acid, isophthalic acid, and citraconic acid, and anhydrides thereof may also be used.
(iii) Examples of the ether-based polyol include polyether diols, poly(oxytetramethylene) glycol, and poly(oxybutylene) glycol. Specific examples of the polyether diol include polypropylene glycol, polyethylene glycol, polytetramethylene glycol, and propylene-modified polytetramethylene glycol.
(iv) Examples of the polycarbonate-based polyol include reaction products of carbonate derivatives and the diols. Examples of the carbonate derivatives include diaryl carbonates such as diphenyl carbonate, dimethyl carbonate, and diethyl carbonate. Examples of the diols include the compounds described above.
(v) Examples of the acrylate compound having a hydroxyl group include 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, and polypropylene glycol mono(meth)acrylate.

In the production of such urethane acrylate, the isocyanate compound, the polyol compound, and the acrylate compound having a hydroxyl group, which are the constituent components thereof, may be reacted by a batch charging method. Alternatively, the hydroxyl group-containing (meth)acrylate compound and the isocyanate compound may be reacted to first produce a prepolymer having an excess of isocyanate groups, and the remaining isocyanate groups may then be reacted with the polyol compound.

Alternatively, the isocyanate compound and the polyol compound may be reacted to first produce a prepolymer having an excess of isocyanate groups, and the remaining isocyanate groups may then be reacted with the hydroxyl group-containing (meth)acrylate compound. The urethane (meth)acrylate produced by these methods preferably has a polyurethane chain.

In the present invention, commercially available products may be used, including Shikoh UT-5569 manufactured by Nippon Synthetic Chemical Industry Co., Ltd., AUP-838 manufactured by Tokushiki Co., Ltd., RUA-062S, RUA-058SY2, RUA-012, and RUA-075 manufactured by Asia Industry Co., Ltd., and P7-532 manufactured by Kyoeisha Chemical Co., Ltd.

### [Component (b): Photopolymerizable (meth)acrylic compounds]

The photopolymerizable coating composition of the present invention includes component (b): photopolymerizable (meth)acrylic compounds, as a component that photocopolymerizes with component (a). The component (b) includes component (b1): a photopolymerizable acrylic compound having a structural unit derived from a fluorosilsesquioxane derivative represented by formula (1), component (b2): a reactive silicone, and component (b3): a photopolymerizable acrylic compound having no urethane unit and not having both fluorine atom and Si atom at the same time. However, the component (b) does not include the component (a). The component (b1), the component (b2), and the component (b3) are mixed in a diluted state or in a state consisting of an undiluted polymer.

There is no particular limitation on the proportion of each of the component (b1), the component (b2), and the component (b3) in the component (b). In general, each component is blended such that the total amount of the component (b1) and the component (b2) accounts for 0.1 to 10% by weight, preferably 0.5 to 5% by weight, relative to the total amount of the component (b), and the component (b3) accounts for the remainder. In general, the component (b2) is combined with the component (b1) in an amount of 0.1 to 10 times, preferably 0.2 to 5 times, by weight relative to the component (b1). In the present invention, a synergistic effect is achieved by using the component (b2) in combination with the component (b1).

### [Component (b1): Photopolymerizable acrylic compound having a structural unit derived from a fluorosilsesquioxane derivative]

The component (b1) included in the component (b) used in the present invention has a fluorosilsesquioxane structure, and is generally classified into a random-type structure, a ladder-type structure, or a cage-type structure according to its Si-O-Si skeleton. Among these, a photopolymerizable (meth)acrylic compound having a structural unit derived from a fluorosilsesquioxane derivative represented by formula (1) is particularly preferable.

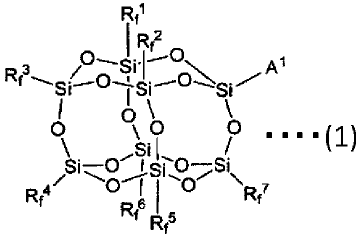

In formula (1), R_{f}¹ to R_{f}⁷ are each independently a linear or branched fluoroalkyl having 1 to 20 carbon atoms, in which at least one methylene may be replaced by oxygen; a fluoroaryl having 6 to 20 carbon atoms, in which at least one hydrogen may be replaced by fluorine or trifluoromethyl; or a fluoroarylalkyl having 7 to 20 carbon atoms, in which at least one hydrogen in the aryl or alkyl may be replaced by fluorine or trifluoromethyl, and A¹ is a group represented by formula (1-1) or formula (1-2).
Note that the meaning of the phrase "at least one methylene in the fluoroalkyl may be replaced by oxygen" is illustrated by an example. For example, groups in which at least one methylene in a fluoroalkyl terminal C₄H₉- is replaced by oxygen include C₃H₇-O-, CH₃-O-(CH₂)₂-, and CH₃-O-CH₂-O-. In this way, the term "at least one" means "at least one selected without distinction." In view of the stability of the compound, CH₃-O-CH₂-O-, in which oxygen atoms are not adjacent to each other, is preferable to CH₃-O-O-CH₂-, in which oxygen atoms are adjacent to each other.

Preferably, R_{f}¹ to R_{f}⁷ in formula (1) are each independently 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1,1,2,2-tetrahydrododecyl, pentacosafluoro-1,1,2,2-tetrahydrotetradecyl, (3-heptafluoroisopropoxy)propyl, pentafluorophenylpropyl, pentafluorophenyl, or α,α,α-trifluoromethylphenyl.

More preferably, R_{f}¹ to R_{f}⁷ in formula (1) are each independently 3,3,3-trifluoropropyl or 3,3,4,4,5,5,6,6,6-nonafluorohexyl.

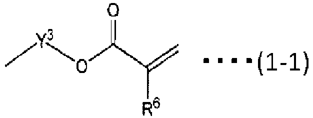

In formula (1-1), Y³ is an alkylene having 2 to 10 carbon atoms, preferably an alkylene having 2 to 6 carbon atoms, and R⁶ is hydrogen, a linear or branched alkyl having 1 to 5 carbon atoms, or an aryl having 6 to 10 carbon atoms, preferably hydrogen or an alkyl having 1 to 3 carbon atoms.

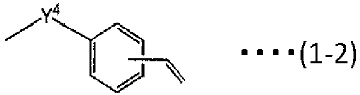

In formula (1-2), Y⁴ is a single bond or an alkylene having 1 to 10 carbon atoms.

The fluorosilsesquioxane derivative (formula (1)) is produced by the following method. First, a silicon compound (formula (3)) having a trifunctional hydrolyzable group represented by formula (3) is hydrolyzed and polycondensed in an oxygen-containing organic solvent in the presence of an alkali metal hydroxide, thereby producing a compound (formula (4)) represented by formula (4).

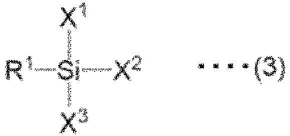

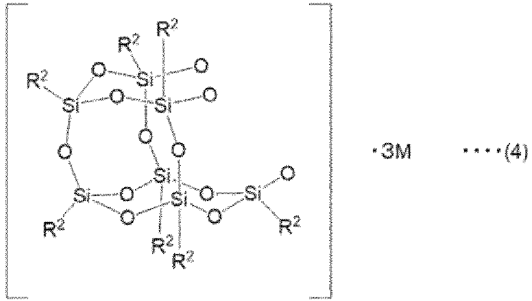

In formula (4), M is not particularly limited as long as it is an alkali metal. Examples of such alkali metals include lithium, sodium, potassium, and cesium.

R¹ and R² in formulas (3) and (4) each independently correspond to one group selected from R_{f}¹ to R_{f}⁷ in formula (1), and are a linear or branched fluoroalkyl having 1 to 20 carbon atoms, in which at least one methylene may be replaced by oxygen; a fluoroaryl having 6 to 20 carbon atoms, in which at least one hydrogen may be replaced by fluorine or trifluoromethyl; or a fluoroarylalkyl having 7 to 20 carbon atoms, in which at least one hydrogen in the aryl or alkyl may be replaced by fluorine or trifluoromethyl, and X¹ to X³ are hydrolyzable groups.

Preferably, R¹ and R² in formulas (3) and (4) are each independently 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1,1,2,2-tetrahydrododecyl, pentacosafluoro-1,1,2,2-tetrahydrotetradecyl, (3-heptafluoroisopropoxy)propyl, pentafluorophenylpropyl, pentafluorophenyl, or α,α,α-trifluoromethylphenyl.

More preferably, R¹ and R² in formulas (3) and (4) are each independently 3,3,3-trifluoropropyl or 3,3,4,4,5,5,6,6,6-nonafluorohexyl.

Next, the fluorosilsesquioxane derivative (formula (1)) is obtained by reacting the compound (formula (4)) with a compound (formula (5)) represented by formula (5).

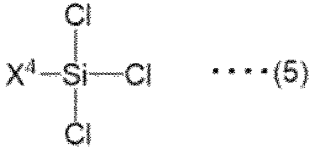

The group X⁴ in formula (5) is a group represented by formula (1-1) or formula (1-2).

Among such fluorosilsesquioxane derivatives (formula (1)), γ-methacryloxypropylhepta(trifluoropropyl)-T8-silsesquioxane represented by formula (6) is preferable.

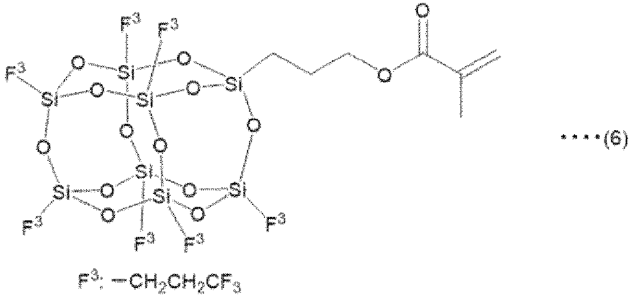

Incorporating the fluorosilsesquioxane derivative (formula (1)), such as γ-methacryloxypropylhepta(trifluoropropyl)-T8-silsesquioxane, into the coat layer further improves the antifouling function of the coat layer. In incorporating the fluorosilsesquioxane derivative (formula (1)) into the photopolymerizable (meth)acrylic compounds, the fluorosilsesquioxane derivative (formula (1)) may be directly mixed with other photopolymerizable (meth)acrylic compounds, or an oligomer produced by crosslinking and/or polymerizing the fluorosilsesquioxane derivative (formula (1)) and the photopolymerizable (meth)acrylic compounds in advance may be mixed with other photopolymerizable acrylic compounds.

In general, a polymer having fluorosilsesquioxane derivative (formula (1)) units is produced in advance by copolymerizing the fluorosilsesquioxane derivative (formula (1)) with one or more (meth)acrylate-based copolymerization components selected from monofunctional acrylates, difunctional acrylates, and polyfunctional acrylates, and this polymer is used as part of the photopolymerizable (meth)acrylic compounds. In this case, the polymer containing fluorosilsesquioxane derivative (formula (1)) units is blended at a ratio of 0.01 to 10 parts by weight, preferably 0.05 to 5 parts by weight, relative to the photopolymerizable components.

As the one or more (meth)acrylate-based copolymerization components described above, compounds generally referred to as photocurable acrylic monomers may be used, for example, monofunctional acrylates such as (meth)acrylic acid, (meth)acrylic acid esters, and hydroxy group-containing (meth)acrylic acid esters, difunctional acrylates such as (poly)alkylene glycol di(meth)acrylates, polyfunctional acrylates having three or more functional groups such as pentaerythritol triacrylate, and further, oligomers obtained by polymerizing these.

### [Component (b2): Reactive Silicone]

The component (b2): reactive silicone included in the component (b) used in the present invention is a group of silicone compounds also referred to as reactive silicone oils or polysiloxane-based macromonomers. These are used in the field of polymer synthesis as raw materials for block copolymers and graft copolymers, and also as modifiers for molding resins and coating modifiers. The component (b2) improves the surface smoothness of the photopolymerizable coating composition of the present invention.

As the component (b2), a polyorganosiloxane compound having terminal vinyl groups is preferable, and a polydimethylsiloxane macromonomer having methacryloyl groups at the terminals is further preferable.

### [Component (b3): Photopolymerizable Acrylic Compound Having No Urethane Unit and No Fluorine Atom and Si Atom]

The photopolymerizable coating composition of the present invention includes the component (b3): a photopolymerizable acrylic compound having no urethane unit and not having both fluorine atom and Si atom at the same time, as a crosslinking agent or copolymerization monomer that photopolymerizes with at least one of the component (a), the component (b1), and the component (b2) described above. The component (b3) contributes to the extension of polymer chains during curing of the photopolymerizable coating composition of the present invention. The resin component mainly including the component (b3) included in the curing contributes to the strength of the coat layer formed by the curing. The component (b3) is selected from various compounds and products available as a photopolymerizable acrylic compound or a solution containing the same, and there is no limitation on the type thereof.

The component (b3) may also be supplied to the photopolymerizable coating composition of the present invention in a form premixed with one or more selected from the component (a), the component (b1), and the component (b2) described above. A copolymer obtained by reacting at least a portion of the component (b3) with one or more selected from the component (a), the component (b1), and the component (b2) described above may also be supplied to the photopolymerizable coating composition of the present invention.

### [Component (c): Light Stabilizer Represented by Formula (2)]

The component (c) used in the present invention is a light stabilizer containing a compound represented by formula (2).

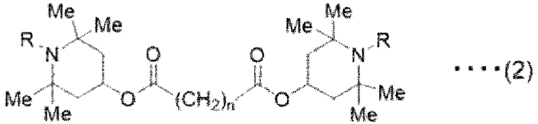

In formula (2), n is an integer of 4 to 12, R is each independently an alkyl having 1 to 5 carbon atoms or an alkoxy having 4 to 10 carbon atoms, and Me is methyl.

In formula (2), preferably, n is an integer of 6 to 12, and R is each independently an alkyl having 1 to 3 carbon atoms or an alkoxy having 6 to 8 carbon atoms; more preferably, n is an integer of 6 to 10, and R is each independently a linear alkyl having 1 to 3 carbon atoms or a linear alkoxy having 6 to 8 carbon atoms or cyclohexyloxy.

Preferred examples of the component (c) include TINUVIN 765 (compound name: bis(1,2,2,6,6-pentamethyl-4-piperidinyl) sebacate), TINUVIN 292 (compound name: a mixture of approximately 75% by weight of bis(1,2,2,6,6-pentamethyl-4-piperidinyl) sebacate and approximately 25% by weight of methyl(1,2,2,6,6-pentamethyl-4-piperidinyl) sebacate), and TINUVIN 123 (compound name: reaction products of decanedioic acid, bis(2,2,6,6-tetramethyl-1-(octyloxy)-4-piperidinyl) ester (in the presence of 1,1-dimethylethyl hydroperoxide and octane)), all manufactured by BASF.

### [Component (d): Ultraviolet Absorber]

The photopolymerizable coating composition of the present invention may further contain the component (d): ultraviolet absorber. Examples of the component (d) include ultraviolet absorbers such as benzotriazoles, hydroxyphenyltriazines, benzophenones, salicylates, cyanoacrylates, triazines, and dibenzoylresorcinols.

Examples of benzotriazoles include TINUVIN PS, TINUVIN 99-2, TINUVIN 326, TINUVIN 384-2, TINUVIN 900, TINUVIN 928, TINUVIN 1130, and TINUVIN Carboprotect, all manufactured by BASF. Examples of hydroxyphenyltriazines include TINUVIN 400, TINUVIN 405, TINUVIN 460, TINUVIN 477, and TINUVIN 479, all manufactured by BASF. Examples of benzophenones include ADEKASTAB 1413 manufactured by ADEKA Corporation and Sumisorb 130 manufactured by Sumika Chemtex Co., Ltd. Examples of salicylates include phenyl salicylate, p-tert-butylphenyl salicylate, and p-octylphenyl salicylate. Examples of cyanoacrylates include 2-ethylhexyl 2-cyano-3,3-diphenylacrylate and ethyl 2-cyano-3,3-diphenylacrylate. Examples of triazines include ADEKASTAB LA-46 and ADEKASTAB LA-F70, manufactured by ADEKA Corporation, and an example of dibenzoylresorcinols includes 4,6-dibenzoylresorcinol. These ultraviolet absorbers may be used alone or in combination of multiple ultraviolet absorbers. The type and combination of the ultraviolet absorber are preferably selected as appropriate based on the wavelength of ultraviolet light to be absorbed.

The photopolymerizable coating composition of the present invention preferably contains the component (d) in an amount of generally 1 to 20 parts by weight, preferably 1 to 10 parts by weight, relative to 100 parts by weight of the total amount of the photopolymerizable components of the component (a) and the component (b), from the viewpoint of maintaining a favorable surface shape of the coat layer even after prolonged use in an outdoor environment, that is, from the viewpoint of achieving outstanding weather resistance.

### [Component (e): Fluorine-Based Surfactant]

The photopolymerizable coating composition of the present invention may further contain the component (e): fluorine-based surfactant. The component (e) refers to monomers and oligomers having a fluorine atom and a photopolymerizable unsaturated group in the chemical structure, and refers to a group of materials referred to in the coating field as fluorine-based additives, fluorine-based surfactants, fluorine-based surface modifiers, and the like. In the present specification, for convenience, the component (e) is referred to by one of its general names, "fluorine-based surfactant."

As the component (e), nonionic types are preferable, which do not undergo component separation in the photopolymerizable coating composition of the present invention and have high solubility in various organic solvents (for example, ether-based solvents, ester-based solvents, ketone-based solvents, and alcohol-based solvents). The component (e) preferably contains 0.01 to 80% by weight of fluorine.

A preferable component (e) may be a perfluoropolyether compound having a perfluoropolyether skeleton and photopolymerizable unsaturated groups at one or both ends thereof. The perfluoropolyether skeleton represents, for example, a structural unit of -(O-CF₂CF₂)-, -(OCF₂CF₂CF₂)-, or -(O-CF₂C(CF₃)F)-. The photopolymerizable unsaturated group is not particularly limited, and examples thereof include groups such as (meth)acryloyl, (meth)acryloyloxy, vinyl, and allyl, and a (meth)acryloyl group is preferable from the viewpoint of reactivity with the component (a) and the component (b).

As the component (e), for example, "Megafac (registered trademark) RS-75" (trade name, manufactured by DIC Corporation), "KY-1203" (trade name, manufactured by Shin-Etsu Chemical Co., Ltd.), "FLUOROLINK AD1700" and "FLUOROLINK MD700" (trade names, manufactured by Solvay Solexis Co., Ltd.), "Optool DAC-HP" (trade name, manufactured by Daikin Chemical), and "CN4000" (trade name, manufactured by Sartomer) may be used.

The photopolymerizable coating composition of the present invention may contain the component (e) in an amount of generally 0.1 to 10 parts by weight, preferably 0.5 to 5 parts by weight, relative to 100 parts by weight of the total amount of the photopolymerizable components of the component (a) and the component (b).

### [2. Polymerization Initiator]

As a polymerization initiator for curing the photopolymerizable coating composition of the present invention, those distributed under the name of photopolymerization initiator may be used without limitation. As such photopolymerization initiators, for example, polymers of hydroxy ketones such as {2-hydroxy-2-methyl-1-phenylpropanone}, 1-hydroxycyclohexyl phenyl ketone, 2-hydroxy-2-methyl-1-phenylpropan-1-one, 2,2-dimethoxy-1,2-diphenylethane-1-one, 1-{4-(2-hydroxyethoxy)phenyl}-2-hydroxy-2-methyl-1-propan-1-one, 2,4,6-trimethylbenzoyldiphenylphosphine oxide, and bis(2,4,6-trimethylbenzoyl)phenylphosphine oxide may be used.

### [3. Additives]

Various additives may be added to the photopolymerizable coating composition of the present invention as needed. For example, a filler may be added to impart hardness and scratch resistance to the coat layer. A leveling agent may be added to improve coatability. In addition, additives such as weathering agents and antifoaming agents may also be added.

More specifically, optional components such as an active energy ray sensitizer, a polymerization inhibitor, a polymerization initiation aid, a leveling agent, a wettability improver, a surfactant, a plasticizer, a light stabilizer other than the component (c), an antioxidant, an antistatic agent, a silane coupling agent, an inorganic filler (such as silica or alumina), and an organic filler may further be incorporated into the photopolymerizable coating composition, to the extent that such components do not adversely affect the properties of the coat layer formed from the photopolymerizable coating composition.

Examples of light stabilizers other than the component (c) include hindered benzoate-based light stabilizers and hindered amine light stabilizers (HALS) other than the component (c).

Examples of hindered benzoate-based light stabilizers include n-hexadecyl-3,5-di-t-butyl-4-hydroxybenzoate, 2,4-di-t-butylphenyl-3,5-di-t-butyl-4-hydroxybenzoate, and 2,4-di-t-amylphenyl-3,5-di-t-butyl-4-hydroxybenzoate. Examples of hindered amine light stabilizers (HALS) other than the component (c) include TINUVIN (registered trademark) 5100 (neutral-type general-purpose HALS) manufactured by BASF SE, TINUVIN 152 (compound name: 2,4-bis[N-butyl-N-(1-cyclohexyloxy-2,2,6,6-tetramethylpiperidin-4-yl)amino]-6-(2-hydroxyethylamino)-1,3,5-triazine), TINUVIN 144 (compound name: bis(1,2,2,6,6-pentamethyl-4-piperidinyl)-[[3,5-bis(1,1-dimethylethyl)-4-hydroxyphenyl]methyl]butylmalonate), TINUVIN 111FDL (approximately 50% by weight of TINUVIN 622, compound name: (butanedioic acid polymer (in the presence of 4-hydroxy-2,2,6,6-tetramethylpiperidinyl-yl)ethanol)), and approximately 50% by weight of CHIMASSORB 119, compound name: a mixture of N,N',N",N‴-tetrakis(4,6-bis(butyl-(N-methyl-2,2,6,6-tetramethylpiperidin-4-yl)amino)triazin-2-yl)-4,7-diazadecane-1,10-diamine), or ADEKASTAB LA series manufactured by ADEKA Corporation, specifically LA-52 ((5)-6116), LA-57 ((5)-5555), LA-62 ((5)-5711), LA-67 ((5)-5755), LA-82 ((5)-6023), and LA-87 ((5)-6022). The numbers in parentheses are existing chemical substance numbers.

### [4. Use of Photopolymerizable Coating Composition]

By applying the photopolymerizable coating composition of the present invention to the surfaces of various articles and curing and drying the composition, a coat layer having antifouling and water-repellent functions may be formed on the surfaces of the articles. The articles on which the coat layer may be formed are not particularly limited; however, laminates are advantageous in that the liquid photopolymerizable coating composition of the present invention may be applied with ease. Among the laminates, PPF, which requires antifouling and water-repellent functions, is particularly useful as a laminate utilizing the coat layer.

The layer configuration, manufacturing method, and applications of the laminates provided with the coat layer are described in detail below.

### [Coat Layer]

The coat layer constituting the laminates of the present invention includes a polymer obtained by curing the photopolymerizable coating composition described above on a substrate layer in the presence of a polymerization initiator. The thickness of the coat layer is generally 1 to 100 µm, preferably 2 to 50 µm, and more preferably 3 to 30 µm. The structure of the polymer constituting such a coat layer is complex and cannot be expressed by a single structural unit or a uniform structural formula. In the present invention, the polymer constituting the coat layer is defined by the photopolymerizable compounds contained in the photopolymerizable coating composition.

### [Substrate Layer]

As the substrate layer constituting the laminates of the present invention, a film formed from a thermoplastic resin is desirably used. Examples of the thermoplastic resin include polyurethane-based resins, polyester-based resins, acetate-based resins, polyethersulfone-based resins, polycarbonate-based resins, polyamide-based resins, polyimide-based resins, polyolefin-based resins, (meth)acrylic resins, polyvinyl chloride-based resins, polyvinylidene chloride-based resins, polystyrene-based resins, polyvinyl alcohol-based resins, polyarylate-based resins, polyphenylene sulfide-based resins, and norbornene-based resins. Specifically, thermoplastic polyurethane, polycaprolactone (PCL), acrylic acid polymers, polyesters, polyacrylonitrile, polyether ketones, polystyrene, polyvinyl acetate, or derivatives thereof are preferable. These resins may be used alone or in combination of multiple resins.

A particularly preferable substrate layer is thermoplastic polyurethane. Examples of trade names of thermoplastic polyurethane include ArgoGuard^{®} 49510 and ArgoGuard^{®} 49510-DV manufactured by SWM International, Esmer URSPX86, Esmer URSPX93, and Esmer URSPX98 manufactured by Nippon Matai Co., Ltd., DUS202, DUS213, DUS235, DUS501, DUS601, DUS605, DUS614, DUS203, DUS220, DUS701, XUS2086, XUS2098, DUS451, and DUS450 manufactured by Seedam Co., Ltd., and Uniground XN2001, XN2002, and XN2004 manufactured by Nippon Unipoly Co., Ltd. Among these, polycaprolactone-based thermoplastic polyurethane using polycaprolactone polyol as a polyhydroxy compound, polycarbonate-based thermoplastic polyurethane using polycarbonate polyol, and polyether-based thermoplastic polyurethane using polyether polyol are preferable.

In the present invention, the thickness of the substrate layer is not particularly limited, but is generally 25 to 300 µm, and preferably 100 to 200 µm.

### [Adhesive Layer]

The adhesive layer constituting the laminates of the present invention includes a pressure-sensitive adhesive. As the pressure-sensitive adhesive used in the present invention, any known pressure-sensitive adhesive may be used without limitation, provided that it exhibits adhesiveness at the application temperature of laminates such as PPF, i.e., at a temperature of about 20 to about 30°C, and is used for bonding molded articles including thermoplastic polyurethane-based materials to articles such as glass, metals, plastics, and paper. As such a pressure-sensitive adhesive, commercially available acrylic pressure-sensitive adhesives and urethane-based pressure-sensitive adhesives may be used, with acrylic pressure-sensitive adhesives being preferable. The thickness of the adhesive layer is not particularly limited, but is generally about 10 to 200 µm.

### [Release Layer]

A release layer is preferably further laminated on the adhesive layer constituting the laminates of the present invention. As a material for the release layer, any known release material may be used without limitation, and examples thereof include resin films of polyester-based resins and polyolefin-based resins, cellophane paper, glassine paper, and those having surfaces coated with a fluorine-based or silicone-based release agent. The thickness of the release layer is not particularly limited, but is generally about 20 to 200 µm.

### [Protective Layer]

The laminates of the present invention may have the outer surface of the coat layer covered with a Protective Layer, depending on the form of storage, transportation, and sale thereof. The material of such a Protective Layer is not limited, and plastic films such as polyethylene films that are in general use, release-treated papers, and the like may be appropriately selected.

### [Method for Producing Laminates]

The method for producing the laminates of the present invention may employ any method suitable for forming and laminating each layer without limitation. For example, in the case where the laminates of the present invention further include a release layer and a Protective Layer, the laminates of the present invention may be produced through the following steps.

First, an adhesive layer is formed on the release-treated surface of the release layer. Then, the open surface of the formed adhesive layer and one surface of the substrate layer are brought into close contact with each other, thereby producing a laminate in which the substrate layer, the adhesive layer, and the release layer are in contact in this order. Next, the photopolymerizable coating composition described above is applied onto the open surface of the substrate layer of the obtained laminate, and the applied surface is irradiated with ultraviolet light to cure the photopolymerizable coating composition. Upon completion of curing, a laminate in which the coat layer, the substrate layer, the adhesive layer, and the release layer are in contact in this order is obtained. The open surface of the coat layer is further covered with a protective film. In this way, a laminate in which the Protective Layer, the coat layer, the substrate layer, the adhesive layer, and the release layer are in contact in this order is obtained. The obtained laminate is appropriately cut, wound, and packaged.

### [Surface Protective Films and Decorative Films]

The laminates of the present invention completed in this manner may be cut into units of appropriate length, stacked, or wound, and utilized as surface protective films or decorative films. In applying the laminates, the laminates of the present invention are cut into a shape conforming to the shape and size of the painted surface, and the cut laminates are stretched with an appropriate force to bring the adhesive layer into close contact with the painted surface.

In the laminates of the present invention, the coat layer, which is superior in strength, smoothness, water repellency, and oil repellency, has a function of mitigating external stimuli applied to the applied surface. At the same time, the flexible substrate layer adheres closely to the applied surface via the adhesive layer. After use for a certain period of time, the laminates may be removed without damaging the surface of the applied surface.

### Examples

### [Production of a Polymer Containing γ-Methacryloxypropylhepta(trifluoropropyl)-T8-Silsesquioxane Units, as an Example of Component (b1)]

First, γ-methacryloxypropylhepta(trifluoropropyl)-T8-silsesquioxane was synthesized by the following procedure. A 1 L four-necked flask equipped with a reflux condenser, a thermometer, and a dropping funnel was charged with trifluoropropyltrimethoxysilane (100 g), tetrahydrofuran (THF) (500 mL), deionized water (10.5 g), and sodium hydroxide (7.9 g), and the mixture was heated in an oil bath from room temperature to the reflux temperature of THF while stirring with a magnetic stirrer. Stirring was continued for 5 hours from the start of reflux to complete the reaction. Thereafter, the flask was removed from the oil bath, allowed to stand at room temperature overnight, and then set in the oil bath again, where the mixture was heated and concentrated under constant pressure until a solid precipitated.

The precipitated product was collected by filtration using a pressure filter equipped with a membrane filter having a pore size of 0.5 µm. The obtained solid was then washed once with THF and dried in a vacuum dryer at 80°C for 3 hours, yielding 74 g of a colorless powdery solid.

A 1 L four-necked flask equipped with a reflux condenser, a thermometer, and a dropping funnel was charged with the obtained solid (65 g), dichloromethane (491 g), and triethylamine (8.1 g), and the mixture was cooled to 3°C in an ice bath. Subsequently, γ-methacryloxypropylchlorosilane (21.2 g) was added, and after confirming that the exothermic reaction had subsided, the flask was removed from the ice bath and aged at room temperature overnight. After washing three times with deionized water, the dichloromethane layer was dehydrated with anhydrous magnesium sulfate, and the magnesium sulfate was removed by filtration. The mixture was concentrated using a rotary evaporator until a viscous solid precipitated, and 260 g of methanol was added and stirred until a powder formed. The powder was filtered using a pressure filter equipped with a 5 µm filter paper and dried in a vacuum dryer at 65°C for 3 hours, yielding 41.5 g of a colorless powdery solid. GPC and¹H-NMR measurements were performed on the obtained solid, confirming the formation of γ-methacryloxypropylhepta(trifluoropropyl)-T8-silsesquioxane (formula (6)) represented by formula (6).

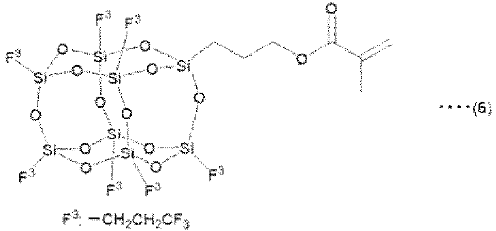

Next, a polymer containing γ-methacryloxypropylhepta(trifluoropropyl)-T8-silsesquioxane units was synthesized by the following procedure.

Into a nitrogen-sealed four-necked round-bottom flask equipped with a reflux condenser and a dropping funnel, the above γ-methacryloxypropylhepta(trifluoropropyl)-T8-silsesquioxane (formula (6)) (25 g), Silaplane FM-0721 (a polydimethylsiloxane macromonomer having a methacryloyloxy group at one terminal with a number-average molecular weight of Mn 5,000, 6.3 g, trade name, manufactured by JNC Corporation), 2-hydroxyethyl methacrylate (18.8 g), methyl methacrylate (12.5 g), and methyl ethyl ketone (62 g) were added, and the mixture was refluxed and degassed for 15 minutes using an oil bath. A solution prepared by dissolving azobisisobutyronitrile (0.48 g) and mercaptoacetic acid (0.054 g) in methyl ethyl ketone (4.8 g) was then added to initiate polymerization. Three hours after the initiation of polymerization, azobisisobutyronitrile (0.48 g) was dissolved in methyl ethyl ketone (4.3 g), added to the mixture, and aged for 5 hours to obtain a solution of the resulting copolymer. Furthermore, para-methoxyphenol (0.16 g) as a polymerization inhibitor and dibutyltin dilaurate (0.15 g, manufactured by Resonac Corporation) were dissolved in methyl ethyl ketone (1.5 g) and added, after which Karenz AOI (acryloyloxy ethyl isocyanate, 26.4 g, trade name, manufactured by Resonac Corporation) was added dropwise using the dropping funnel so that the liquid temperature ranged from 35°C to 50°C, and the mixture was aged at 45°C for 3 hours after the completion of the dropwise addition.

Thereafter, methanol (9 g) was added and the mixture was treated, after which para-methoxyphenol (0.16 g) was further added, and the mixture was diluted with methyl isobutyl ketone (107.3 g) to obtain a 30 wt% solution of the target polymer (A-1).

The obtained polymer (A-1) had a weight-average molecular weight of Mw 42,000 and a polydispersity index of Mw/Mn 1.9. The weight-average molecular weight and polydispersity index were measured using gel permeation chromatograph (GPC, model: Alliance 2695, manufactured by Waters Corporation, column: Shodex GPC KF-804L × 2 (in series), manufactured by Resonac Corporation, guard column: KF-G, manufactured by Resonac Corporation). GPC analysis confirmed that the obtained polymer (A-1) is a polymer containing γ-methacryloxypropylhepta(trifluoropropyl)-T8-silsesquioxane units and having acryloyl groups in side chains.

### [Examples 1 to 11, Comparative Examples 1 to 5]

### [Preparation of Photopolymerizable Coating Composition]

Materials were mixed and stirred in the compositions shown in Table 1 to prepare the photopolymerizable coating compositions of the present invention and photopolymerizable coating compositions for comparison. The materials used are listed below.

### (Component (a))

- P7-532: urethane acrylate manufactured by Kyoeisha Chemical Co., Ltd., trade name: P7-532.

### (Component (b1))

- XUA008: polymer (A-1) prepared by the method described above. A polymer containing γ-methacryloxypropylhepta(trifluoropropyl)-T8-silsesquioxane units and having acryloyl groups in side chains. The parts by weight of XUA008 in Table 1 are the parts by weight of the solid content of the 30 wt% solution of the polymer (A-1).

### (Component (b2))

- FM7711: trade name manufactured by JNC Corporation; Silaplane (registered trademark) FM-7711. A polydimethylsiloxane macromonomer having methacryloyloxy groups at both terminals with a number-average molecular weight of Mn 1,000.
- FM7725: trade name manufactured by JNC Corporation; Silaplane (registered trademark) FM-7725. A polydimethylsiloxane macromonomer having methacryloyloxy groups at both terminals with a number-average molecular weight of Mn 10,000.

### (Component (b3))

- M309: trade name manufactured by Toagosei Co., Ltd.; Aronix (registered trademark) M309. Trimethylolpropane triacrylate.
- DPCA-120: trade name manufactured by Nippon Kayaku Co., Ltd.; KAYARAD DPCA-120. Caprolactone-modified dipentaerythritol hexaacrylate.
- A-HD-N: trade name manufactured by Shin-Nakamura Chemical Co., Ltd.; A-HD-N. 1,6-hexanediol diacrylate.

### (Component (c))

- Tinuvin (registered trademark) 292: trade name of a light stabilizer manufactured by BASF; TINUVIN292 (compound name: a mixture of approximately 75 wt% bis(1,2,2,6,6-pentamethyl-4-piperidinyl) sebacate and approximately 25 wt% methyl(1,2,2,6,6-pentamethyl-4-piperidinyl) sebacate).

### (Component (d))

- Tinuvin (registered trademark) 479: trade name of an ultraviolet absorber manufactured by BASF. Hydroxyphenyltriazine-based ultraviolet absorber.
- Tinuvin (registered trademark) 384-2: trade name of an ultraviolet absorber manufactured by BASF. Benzotriazole-based ultraviolet absorber.
- Tinuvin (registered trademark) 400: trade name of an ultraviolet absorber manufactured by BASF. Hydroxyphenyltriazine-based ultraviolet absorber.

### (Component (e))

- RS-75: UV-reactive surface modifier manufactured by DIC Corporation, a fluorine-based additive, trade name: Megafac (registered trademark) RS-75. Oligomer containing fluorine-containing group, hydrophilic group, lipophilic group, and ultraviolet-reactive group.

### (Other Components)

- Photopolymerization initiator: trade name of a photopolymerization initiator manufactured by BASF; Irgacure (registered trademark) 127. 2-hydroxy-1-(4-((4-(2-hydroxy-2-methylpropanoyl)phenyl)methyl)phenyl)-2-methylpropan-1-one.
- Tinuvin (registered trademark) 770: trade name of a light stabilizer manufactured by BASF. Bis(2,2,6,6-tetramethyl-4-piperidinyl) sebacate.

### [Production of Laminates]

A thermoplastic polyurethane film manufactured by SWM International, trade name: "ArgoGuard (registered trademark) 49510" (thickness of approximately 152 µm), was used as the substrate layer.

Separately, a commercially available acrylic pressure-sensitive adhesive was applied to a release layer treated with a silicone resin release agent, and dried at 120°C for 5 minutes. In this manner, an adhesive layer having a thickness of 40 µm was formed on one side of the release layer.

Next, the open surface of the adhesive layer and the substrate layer were bonded together using a rubber roller, and cured at 45°C for one day. In this manner, a laminate was obtained in which the substrate layer, the adhesive layer, and the release layer were in contact in this order.

The photopolymerizable coating composition produced using the materials described above was applied to the open surface of the substrate layer using a Meyer bar, and dried at 80°C for 3 minutes. Thereafter, the photopolymerizable coating composition was cured at an integrated light intensity of 500 mJ/cm² using a belt conveyor curing unit equipped with a Fusion UV lamp (manufactured by Heraeus). A coat layer having a thickness of 4 µm was formed on the substrate layer. A laminate was obtained in which the coat layer, the substrate layer, the adhesive layer, and the release layer were in contact in this order.

### [Weathering Resistance Test of Laminates]

A QUV test (light source: UVB-313, intensity: 0.71 W/m², test conditions: UV irradiation at 60°C × 4 hours → relative humidity 100% at 50°C × 4 hours, repeated in 1 cycle of 8 hours) was conducted on the four-layer laminate obtained above using an accelerated weathering resistance tester manufactured by Q-Panel, and the gloss and surface roughness parameters of the irradiated surface of the coat layer of the laminate were measured before and after irradiation.

### [Evaluation of Laminates]

### (1) Gloss Measurement

Using a gloss meter "VG7000" manufactured by Nippon Denshoku Industries Co., Ltd., 60-degree specular gloss (gloss) was measured in accordance with the JIS Z 8741 standard, and the surface gloss of the coat layer of the laminate was evaluated before the weathering resistance test and after 672 hours of the weathering resistance test.

### (2) Surface Roughness Parameter Measurement

Using a 3D measuring laser microscope "LEXT OLS5000-SAF" manufactured by Olympus Corporation, the surface of the coat layer of the laminate was measured at any 5 locations under the following conditions in accordance with the ISO 25178 standard, before the weathering resistance test and after 672 hours of the weathering resistance test, and the surface roughness parameter Sa (arithmetic mean height, µm) was calculated using the attached analysis application and averaged.
Objective lens: MPLAPON20×LEXT
Zoom: 1×
Image size: 1024×1024

**[Table 1]**

| | | | | Example | | | | | | | |
|---|---|---|---|---|---|---|---|---|---|---|---|
| | | | | 1 | 2 | 3 | 4 | 5 | 6 | 7 | 8 |
| photopolymeriz able coating composition 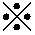 | a | P7-532 | parts by weight | 14.70 | 14.70 | 14.70 | 4.90 | 4.90 | 4.90 | 4.90 | 4.90 |
| | b-1 | XUA008 | parts by weight | 1.60 | 0.80 | 0.80 | 0.80 | 0.80 | 0.80 | 0.80 | 0.80 |
| | b-2 | FM7711 | parts by weight | | 0.10 | | 1.00 | 0.10 | | 0.10 | 0.10 |
| | | FM7725 | parts by weight | 0.10 | | 0.10 | | | 1.00 | | |
| | b-3 | M309 | parts by weight | 78.70 | 73.90 | 73.90 | 88.60 | 88.60 | 88.60 | 88.60 | 88.60 |
| | | DPC-120 | parts by weight | 4.90 | 4.90 | 4.90 | | | | | |
| | | A-HD-N | parts by weight | | 4.80 | 4.80 | 3.90 | 4.80 | 3.90 | 4.80 | 4.80 |
| | | photopolymerization initiator | parts by weight | 7.53 | 7.53 | 7.53 | 7.53 | 7.53 | 7.53 | 7.53 | 7.53 |
| | c | Tinuvin^{®} 292 | parts by weight | 5.0 | 5.0 | 1.5 | 5.0 | 5.0 | 5.0 | 5.0 | 5.0 |
| | Tinuvin^{®} 770 | | parts by weight | | | | | | | | |
| | d | Tinuvin^{®} 479 | parts by weight | | 5.0 | | | 5.0 | 5.0 | | 5.0 |
| | | Tinuvin^{®} 384-2 | parts by weight | 5.0 | | 1.5 | 5.0 | | | 5.0 | |
| | | Tinuvin^{®} 400 | parts by weight | 5.0 | | 1.5 | 5.0 | | | 5.0 | 5.0 |
| | e | RS-75 | parts by weight | | 0.8 | 0.8 | 0.8 | 0.8 | 0.8 | 0.8 | 0.8 |
| weathering resistance test | before test (0 hours) | gloss (60°) | % | 90 | 91 | 88 | 90 | 90 | 90 | 87 | 91 |
| | | surface roughness parameter Sa | µm | 0.021 | 0.023 | 0.019 | 0.015 | 0.015 | 0.020 | 0.033 | 0.021 |
| | after 672 hours | gloss (60°) | % | 88 | 89 | 87 | 86 | 86 | 88 | 87 | 88 |
| | | surface roughness parameter Sa | µm | 0.030 | 0.032 | 0.052 | 0.031 | 0.031 | 0.037 | 0.044 | 0.032 |

| | | | | | Example | | | Comparative Example | | | | |
|---|---|---|---|---|---|---|---|---|---|---|---|---|
| | | | | | 9 | 10 | 11 | 1 | 2 | 3 | 4 | 5 |
| photopolymeriz able coating composition 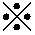 | a | P7-532 | | parts by weight | 4.90 | 4.90 | 4.90 | 14.70 | 4.90 | 4.90 | 4.90 | 4.90 |
| | b-1 | XUA008 | | parts by weight | 0.80 | 0.80 | 0.80 | 1.60 | 0.80 | 0.80 | 0.80 | 0.80 |
| | b-2 | FM7711 | | parts by weight | 0.10 | 0.10 | 0.10 | | 0.10 | 0.10 | 0.10 | 0.10 |
| | | FM7725 | | parts by weight | | | | 0.10 | | | | |
| | b-3 | M309 | | parts by weight | 88.60 | 88.60 | 88.60 | 78.70 | 88.60 | 88.60 | 88.60 | 88.60 |
| | | DPC-120 | | parts by weight | | | | 4.90 | | | | |
| | | A-HD-N | | parts by weight | 4.80 | 4.80 | 4.80 | | 4.80 | 4.80 | 4.80 | 4.80 |
| | | photopolymerization initiator | | parts by weight | 7.53 | 7.53 | 7.53 | 7.53 | 7.53 | 7.53 | 7.53 | 7.53 |
| | c | Tinuvin^{®} 292 | | parts by weight | 2.5 | 2.5 | 5.0 | | | | | |
| | | Tinuvin^{®} 770 | | parts by weight | | | | 5.0 | | 5.0 | 5.0 | 2.5 |
| | d | Tinuvin^{®} 479 | | parts by weight | 2.5 | | | | 5.0 | 5.0 | 5.0 | 2.5 |
| | | Tinuvin^{®} 384-2 | | parts by weight | 2.5 | | | 5.0 | | | | 2.5 |
| | | Tinuvin^{®} 400 | | parts by weight | | | | 5.0 | | | 5.0 | |
| | e | RS-75 | | parts by weight | 0.8 | 0.8 | 0.8 | | 0.8 | 0.8 | 0.8 | 0.8 |
| weathering resistance test | before test (0 hours) | | gloss (60°) | % | 91 | 92 | 92 | 91 | 91 | 90 | 90 | 90 |
| | | surface roughness parameter Sa | | µm | 0.017 | 0.020 | 0.023 | 0.021 | 0.018 | 0.025 | 0.023 | 0.023 |
| | after 672 hours | | gloss (60°) | % | 87 | 90 | 87 | 83 | 78 | 81 | 80 | 82 |
| | | surface roughness parameter Sa | | µm | 0.038 | 0.031 | 0.048 | 0.055 | 0.109 | 0.078 | 0.082 | 0.083 |

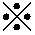 Table 1 shows the proportion (in parts by weight) of each component (c), component (d), component (e), photopolymerization initiator, and Tinuvin^{®} 770 relative to 100 parts by weight of the total amount of photopolymerizable components of component (a) and component (b).

As the results in Table 1 indicate, in the laminates of Examples 1 to 11 in which a coat layer was formed using the photopolymerizable coating composition of the present invention, the use of the light stabilizer represented by formula (2) of component (c) resulted in a smaller change in gloss and surface roughness parameter Sa, that is, excellent weathering resistance was achieved. In contrast, the laminates of Comparative Examples 1 to 5 lacking the light stabilizer represented by formula (2) exhibited a larger change in gloss and surface roughness parameter Sa.

### Industrial Applicability

The photopolymerizable coating composition of the present invention has high utility value as a coat layer material with excellent weathering resistance. The laminates having a coat layer formed using the photopolymerizable coating composition of the present invention have high utility value as PPF and the like. As application targets for PPF and the like including the laminates of the present invention, a wide range of targets may be expected, including vehicles such as automobiles and motorcycles, as well as ships, buildings, electrical products, exhibits, interiors, furniture, factory equipment, industrial machinery, and medical devices.

### Reference Signs List

1 coat layer
2 substrate layer
3 adhesive layer
4 release layer
5 laminate
6 painted surface
7 PPF

## Claims

1. A photopolymerizable coating composition, comprising:
component (a): urethane (meth)acrylate, component (b): photopolymerizable (meth)acrylic compounds, and component (c): a light stabilizer represented by formula (2), wherein the component (a) and the component (b) are included as photopolymerizable components, and are mixed at a ratio of the component (a): 1 to 50 parts by weight and the component (b): 50 to 99 parts by weight relative to a total amount of the photopolymerizable components, and taking a total amount of the component (a) and the component (b) as 100 parts by weight, the component (c) is mixed at a ratio of 1 to 20 parts by weight,
the component (b) comprising:
component (b1): a photopolymerizable acrylic compound having a structural unit derived from a fluorosilsesquioxane derivative represented by formula (1),
component (b2): a reactive silicone, and
component (b3): a photopolymerizable acrylic compound having no urethane unit and not having both fluorine atom and Si atom at the same time, 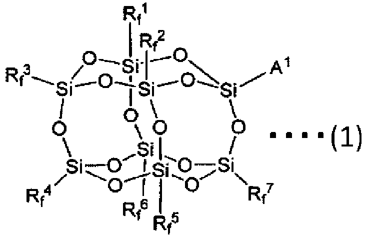
(in formula (1), R_{f}¹ to R_{f}⁷ are each independently a linear or branched fluoroalkyl having 1 to 20 carbon atoms, in which at least one methylene may be replaced by oxygen; a fluoroaryl having 6 to 20 carbon atoms, in which at least one hydrogen may be replaced by fluorine or trifluoromethyl; or a fluoroarylalkyl having 7 to 20 carbon atoms, in which at least one hydrogen in the aryl or alkyl may be replaced by fluorine or trifluoromethyl, and A¹ is a group represented by formula (1-1) or formula (1-2)) 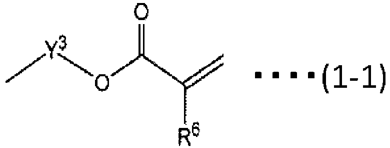
(in formula (1-1), Y³ is an alkylene having 2 to 10 carbon atoms, and R⁶ is hydrogen, a linear alkyl having 1 to 5 carbon atoms, a branched alkyl having 3 to 5 carbon atoms, or an aryl having 6 to 10 carbon atoms) 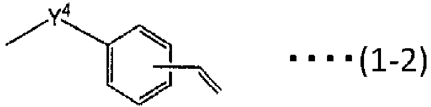
(in formula (1-2), Y⁴ is a single bond or an alkylene having 1 to 10 carbon atoms) 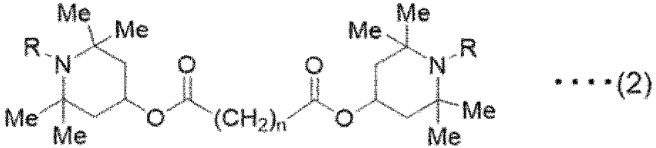
(in formula (2), n is an integer of 4 to 12, R is each independently an alkyl having 1 to 5 carbon atoms or an alkoxy having 4 to 10 carbon atoms, and Me is methyl).

2. The photopolymerizable coating composition according to claim 1,
wherein the component (b1) includes a structural unit derived from γ-methacryloxypropylhepta(trifluoropropyl)-T8-silsesquioxane represented by formula (1-3), and 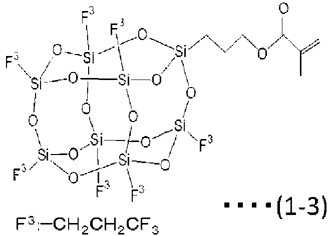
the component (b2) is a polyorganosiloxane compound having terminal vinyl groups.

3. The photopolymerizable coating composition according to claim 1, further comprising component (d): an ultraviolet absorber.

4. The photopolymerizable coating composition according to claim 2, further comprising component (d): an ultraviolet absorber.

5. The photopolymerizable coating composition according to claim 1, further comprising component (e): a fluorine-based surfactant.

6. The photopolymerizable coating composition according to claim 2, further comprising component (e): a fluorine-based surfactant.

7. A laminate, formed by a coat layer comprising a cured product of the photopolymerizable coating composition according to any one of claims 1 to 6 and a substrate layer in contact with each other.

8. A laminate, formed by a coat layer comprising a cured product of the photopolymerizable coating composition according to any one of claims 1 to 6, a substrate layer comprising thermoplastic polyurethane, and an adhesive layer comprising a pressure-sensitive adhesive, in contact with each other in this order.

9. An article, having the laminate according to claim 8 affixed to a surface thereof via the adhesive layer.
